# EUROPÄISCHE PATENTANMELDUNG

(11) **EP 2 527 809 A1**
(43) Veröffentlichungstag der Anmeldung: **28.11.2012**
(21) Anmeldenummer: 12169293.3
(22) Anmeldetag: 24.05.2012
(51) Int. Cl.: G01L 1/18, G01L 1/22, G01L 5/00, G01L 5/04, G01M 13/04

(54) **Sensoreinrichtung**

(30) Priorität: 27.05.2011 DE 102011103848
(71) Anmelder: Deutsches Zentrum für Luft- und Raumfahrt e.V., 51147 Köln (DE)
(72) Erfinder: Abildgaard, Max, 38108 Braunschweig (DE)
(74) Vertreter: Günther, Constantin

(57) **Zusammenfassung**

Die Erfindung betrifft eine Sensoreinrichtung (1) mit einem dünnen, bandartigen Trägermaterial (2,20) und mit einem oder mehreren Kraftsensoren (3), die auf das Trägermaterial aufgebracht und/oder in das Trägermaterial integriert sind, wobei das Trägermaterial dazu eingerichtet ist,
a) zwischen einer Außenfläche (5,6,21) eines Wälzlagers (4) und einer als Gegenlager wirkenden Aufnahmeeinrichtung (7) für das Wälzlager angeordnet zu werden und mittels der Kraftsensoren eine oder mehrere der zwischen dem Wälzlager und dem Gegenlager wirkenden Kräfte zu erfassen und als elektrische Signale abzugeben, oder
b) zwischen einer Außenfläche eines Wälzlagers und einer mittels des Wälzlagers gelagerten drehbaren Welle angeordnet zu werden und mittels der Kraftsensoren eine oder mehrere der zwischen dem Wälzlager und der drehbaren Welle wirkenden Kräfte zu erfassen und als elektrische Signale abzugeben.

Die Erfindung betrifft ferner ein Verfahren zur Auswertung von Signalen einer Sensoreinrichtung mit mehreren über den Umfang eines Wälzlagers verteilt angeordneten Kraftsensoren.

## Beschreibung

Die Erfindung betrifft eine Sensoreinrichtung gemäß dem Anspruch 1.

Generell betrifft die Erfindung das Gebiet der Überwachung von Wälzlagern in deren Betrieb, z.B. durch die Erfassung von Zustandsdaten des Wälzlagers.

Als Wälzlager seien in diesem Zusammenhang alle Arten von Lagern verstanden, bei denen zwei zueinander bewegliche Komponenten, nämlich ein erster Lagerring und ein zweiter Lagerring, durch rollende Körper voneinander getrennt sind. Umfasst sind insbesondere Kugellager, Rollenlager und Nadellager in jeglicher Ausführungsform, insbesondere als Radiallager, Axiallager oder konusförmige Lager, wie z. B. Kegelrollenlager. Entsprechend kann als Wälzkörper z. B. eine Kugel, eine Zylinder-, eine Kegel- oder Tonnenrolle oder, im Falle eines Nadellagers, eine Nadelhülse vorgesehen sein.

Wälzlager werden überall im Maschinenbau eingesetzt. Sie sind langlebig und einfach anwendbar, können aber auch Defekte entwickeln, die zu hohen Reparaturkosten führen können. Typische Defekte sind sogenannte Pittings, bei denen sich kleine Druckstellen und/oder Abplatzungen in den WälzkörperLaufbahnen bilden. Solche Pittings entstehen meistens schleichend und können detektiert werden. Für einen Betreiber einer Maschine, in der ein solches Wälzlager betrieben wird, besteht häufig ein Interesse an einer Vorhersage, wann eine Reparatur bzw. ein Austausch des Wälzlagers erforderlich ist. Zu diesem Zweck werden bisher typischerweise Körperschallmessungen durchgeführt. Hierbei wird ein Beschleunigungssensor, der ähnlich wie ein Mikrofon wirkt, zur Erfassung der Schwingungen des Wälzlagers verwendet. Hierdurch können insbesondere die charakteristischen Geräusche, die von den Wälzkörpern verursacht werden, wenn sie über die Pittings rollen, aufgenommen werden. Allerdings ist eine solche Körperschallanalyse relativ aufwendig und teuer und kann nicht immer genau ein defektes Wälzlager lokalisieren.

Es gibt bereits Vorschläge, eine solche Überwachung mit Hilfe von Beschleunigungssensoren (EP 1 304 463 A1) oder mit Hilfe von Kraftsensoren (DE 10 2008 006 934 A1) durchzuführen. Aufwendig ist dort allerdings die Anordnung und Unterbringung der Sensoren. Aus der DE 10 2009 040 344 A1 geht ein Aktuator mit integriertem Zustandsüberwachungssystem hervor. Vorgeschlagen wird eine piezoresistive Sensorik, die in Form einer dünnen Beschichtung auf dem Außenring eines Kugellagers vorgesehen ist. Hierdurch ist zwar eine kompakte Unterbringung der Sensorik möglich. Allerdings erfordert dies die Herstellung besonderer Wälzlager mit auf den Elementen des Wälzlagers vorgesehener Sensorbeschichtung. Diese Herstellungsschritte lassen sich nicht ohne weiteres in den üblichen Herstellprozess eines Wälzlagers integrieren.

Der Erfindung liegt daher die Aufgabe zugrunde, eine Sensoreinrichtung anzugeben, die sich mit geringerem Aufwand zur Erfassung von Zustandsdaten eines Wälzlagers einsetzen lässt.

Diese Aufgabe wird durch eine Sensoreinrichtung mit einem dünnen, bandartigen Trägermaterial und mit einem oder mehreren Kraftsensoren gelöst, die auf das Trägermaterial aufgebracht und/oder in das Trägermaterial integriert sind, wobei das Trägermaterial dazu eingerichtet ist,
a) zwischen einer Außenfläche eines Wälzlagers und einer als Gegenlager wirkenden Aufnahmeeinrichtung für das Wälzlager angeordnet zu werden und mittels der Kraftsensoren eine oder mehrere der zwischen dem Wälzlager und dem Gegenlager wirkenden Kräfte zu erfassen und als elektrische Signale abzugeben, oder
b) zwischen einer Außenfläche eines Wälzlagers und einer mittels des Wälzlagers gelagerten drehbaren Welle angeordnet zu werden und mittels der Kraftsensoren eine oder mehrere der zwischen dem Wälzlager und der drehbaren Welle wirkenden Kräfte zu erfassen und als elektrische Signale abzugeben.

Die Außenfläche des Wälzlagers kann jede von außen zugängliche Fläche des Wälzlager sein, wie z. B. eine radiale Außenfläche, z.B. die innere oder äußere Umfangsfläche, oder eine axiale Außenfläche, d.h. eine stirnseitige Fläche, oder bei Wälzlagern mit kegelförmigen Bauteilen eine hierdurch gebildete konische Fläche. Die Kraftsensoren können auf das Trägermaterial aufgebracht sein oder zumindest teilweise in das Trägermaterial integriert sein. Die Kraftsensoren können auch vollständig in das Trägermaterial integriert sein. Insbesondere kann das Trägermaterial dazu eingerichtet sein, unmittelbar zwischen einer Außenfläche des Wälzlagers und einer als Gegenlager wirkenden Aufnahmeeinrichtung für das Wälzlager angeordnet zu werden, bzw. unmittelbar zwischen einer Außenfläche des Wälzlagers und einer mittels des Wälzlagers gelagerten drehbaren Welle angeordnet zu werden.

Ein Vorteil der Erfindung ist, dass die Sensoreinrichtung kostengünstig herstellbar und geeignet zur Massenproduktion ist. Ein weiterer Vorteil ist, dass die Sensoreinrichtung auf einfache Weise ohne besondere Werkzeuge zwischen dem Wälzlager und dem Gegenlager bzw. der drehbaren Welle angebracht werden kann, z. B. im Laufe der Montage einer Einrichtung, die das Wälzlager und das Gegenlager aufweist, wie z. B. bei einer Windkraft-Energieerzeugungsanlage. Hierbei können bisherige Herstellungs- und Arbeitsabläufe bei der Herstellung der einzelnen Bauteile, wie dem Wälzlager, und der Montage des Wälzlagers und der das Wälzlager aufnehmenden Einrichtung beibehalten werden. So ist es insbesondere nicht erforderlich, Teile des Wälzlagers, der Welle oder des Gegenlagers vorab mit besonderen Beschichtungen zu versehen, die unter Umständen nicht ohne weiteres in bisherige Produktionsverfahren oder Herstellungsschritte integrierbar sind. Vielmehr kann die Sensoreinrichtung getrennt von dem Wälzlager und den übrigen Teilen der Anlage hergestellt werden. Hierdurch können auch die Kosten bei der Herstellung und Montage der übrigen Bauteile, wie dem Wälzlager, dem Gegenlager und einer Anlage, in der diese Bauteile angeordnet werden sollen, gering gehalten werden.

Vorteilhaft können mit den von der Sensoreinrichtung abgegebenen Signalen, die durch den Kraftsensor oder die Kraftsensoren infolge der erfassten Kräfte abgegeben werden, aktuelle Belastungssituationen des Wälzlagers bestimmt und eventuelle Schäden in der Laufbahn der Wälzkörper oder an den Wälzkörpern frühzeitig erkannt werden. So können insbesondere durch Überlastung oder kleine Unreinheiten im Material des Wälzlagers entstehende Pittings diagnostiziert werden. Ein weiterer Vorteil ist, dass ohne wesentliche Erhöhung der Kosten mehrere Messpunkte vorgesehen werden können, indem mehrere Kraftsensoren an verschiedenen Stellen auf das bandartige Trägermaterial aufgebracht und/oder in dem bandartigen Trägermaterial integriert werden. Dies erlaubt eine noch umfassendere Überwachung des Wälzlagers sowie die Ermittlung von weiteren Belastungsdaten, wie z. B. der Belastungsrichtung oder einer Stelle des Belastungsmaximums des Wälzlagers.

Ein weiterer Vorteil der Erfindung ist, dass die Sensoreinrichtung auch für eine Nachrüstung in bestehenden Anlagen, in denen Wälzlager in Betrieb sind, gut geeignet ist. Die Sensoreinrichtung kann auch ohne weiteres unter einer gewissen Vorspannung zwischen dem Wälzlager und dem Gegenlager verbaut werden, ohne dass die Qualität der Kraftsensierung darunter leidet. Es ist lediglich eine entsprechende Kalibrierung eines Nullwerts der zu erfassenden Kraft erforderlich, die z. B. bei elektronischer Auswertung softwaremäßig vorgenommen werden kann.

Als Material für das dünne, bandartige Trägermaterial kommen Metalle wie Aluminium und Stahl oder auch Kunststoffe, insbesondere robuste, schlagzähe Kunststoffe in Frage. Auch die Verwendung von faserverstärkten Kunststoffmaterialien ist vorteilhaft.

Insbesondere ist keine besondere Vorbereitung von Oberflächen des Wälzlagers oder des Gegenlagers notwendig, wie dies z. B. bei der direkten Anbringung der Sensorik gemäß DE 10 2009 040 344 A1 notwendig ist. Es können daher die Wälzlager unverändert verwendet werden, so dass keine teure Oberflächen-Vorbereitung, wie z. B. ein Polierprozess, notwendig ist.

Ein weiterer Vorteil ist, dass bei einem Austausch des Wälzlagers, z. B. wegen Verschleiß, keine neue Sensoreinrichtung beschafft werden muss, da diese nicht Bestandteil des Wälzlagers ist. Auch die Verkabelung bleibt dabei erhalten.

Die Erfindung eignet sich für sämtliche Arten von Wälzlagern, insbesondere die eingangs erwähnten Arten.

Eine vorteilhafte Weiterbildung der Erfindung betrifft eine hülsenförmig ausgebildete Sensoreinrichtung, bei der das dünne, bandartige Trägermaterial wenigstens einen zylindrischen oder konischen Abschnitt der Sensoreinrichtung bildet, wobei der oder die Kraftsensoren in dem zylindrischen oder konischen Abschnitt auf das Trägermaterial aufgebracht und/oder in das Trägermaterial integriert sind, wobei der zylindrische oder konische Abschnitt dazu eingerichtet ist,
a) zwischen einer Außenfläche eines Wälzlagers und einer als Gegenlager wirkenden Aufnahmeeinrichtung für das Wälzlager angeordnet zu werden und mittels der Kraftsensoren eine oder mehrere der zwischen dem Wälzlager und dem Gegenlager wirkenden Kräfte zu erfassen und als elektrische Signale abzugeben, oder
b) zwischen einer Außenfläche eines Wälzlagers und einer mittels des Wälzlagers gelagerten drehbaren Welle angeordnet zu werden und mittels der Kraftsensoren eine oder mehrere der zwischen dem Wälzlager und der drehbaren Welle wirkenden Kräfte zu erfassen und als elektrische Signale abzugeben.

Eine solche hülsenförmig ausgebildete Sensoreinrichtung kann vorteilhaft zwischen der äußeren Umfangsfläche des Wälzlagers und dem Gegenlager angeordnet werden, so dass bei zylindrischer Ausführung des äußeren Lagerrings des Wälzlagers in radialer Richtung wirkende Kräfte erfasst werden können. Die hülsenförmig ausgebildete Sensoreinrichtung kann vorteilhaft auch zwischen der inneren Umfangsfläche des Wälzlagers und einer durch das Wälzlager geführten und darin gelagerten drehbaren Welle angeordnet werden, so dass bei zylindrischer Ausführung des inneren Lagerrings des Wälzlagers in radialer Richtung wirkende Kräfte erfasst werden können. Sofern das Wälzlager konisch ausgebildet ist, z. B. als Zylinderrollenlager, können die über die äußere Umfangsfläche übertragenen, schräg wirkenden Kräfte erfasst werden, d. h. eine Kombination aus radialen und axialen Kräften. Die hülsenförmig ausgebildete Sensoreinrichtung kann insbesondere die Form einer Manschette bzw. einer Schelle aufweisen.

Eine vorteilhafte Weiterbildung der Erfindung betrifft eine ringscheibenförmig ausgebildete Sensoreinrichtung, bei der das dünne, bandartige Trägermaterial wenigstens einen ringscheibenförmigen Abschnitt der Sensoreinrichtung bildet, wobei der oder die Kraftsensoren in dem ringscheibenförmigen Abschnitt auf das Trägermaterial aufgebracht und/oder in das Trägermaterial integriert sind, wobei der ringscheibenförmige Abschnitt dazu eingerichtet ist, zwischen einer stirnseitigen Fläche des Wälzlagers und einer der stirnseitigen Fläche zugeordneten Fläche des Gegenlagers oder der drehbaren Welle angeordnet zu werden und eine oder mehrere der zwischen dem Wälzlager und dem Gegenlager oder der drehbaren Welle wirkenden Kräfte zu erfassen und als elektrische Signale abzugeben.

Eine solche ringscheibenförmig ausgebildete Sensoreinrichtung eignet sich insbesondere zur Erfassung axialer Kräfte zwischen dem Wälzlager und dem Gegenlager.

Eine vorteilhafte Weiterbildung der Erfindung betrifft eine Sensoreinrichtung, die gekennzeichnet ist durch eine Kombination wenigstens einer Sensoreinrichtung nach Anspruch 2 mit wenigstens einer Sensoreinrichtung nach Anspruch 3, wobei das dünne, bandartige Trägermaterial wenigstens einen zylindrischen oder konischen Abschnitt und an den zylindrischen oder konischen Abschnitt angrenzend einen dazu abgewinkelten ringscheibenförmigen Abschnitt der Sensoreinrichtung bildet, wobei der oder die Kraftsensoren in dem zylindrischen oder konischen Abschnitt und in dem ringscheibenförmigen Abschnitt auf das Trägermaterial aufgebracht und/oder in das Trägermaterial integriert sind. Mit einer derartigen Sensoreinrichtung können vorteilhaft sowohl radial wirkende Kräfte als auch axial wirkende Kräfte zwischen dem Wälzlager und dem Gegenlager erfasst werden. Sofern der eine Abschnitt des Trägermaterials konisch ausgebildet ist, können über die in diesem Abschnitt angeordneten Kraftsensoren die resultierenden Kräfte aus der radialen und axialen Belastung des Wälzlagers erfasst werden. Durch zusätzliche getrennte Erfassung der axialen Kräfte mittels der in dem ringscheibenförmigen Abschnitt angeordneten Kraftsensoren kann hieraus vorteilhaft rechnerisch der radiale Kraftanteil ermittelt werden.

Es ist vorteilhaft, mehrere Kraftsensoren über den Umfang der Sensoreinrichtung verteilt anzuordnen. Gemäß einer vorteilhaften Weiterbildung der Erfindung sind mehrere Kraftsensoren gleichmäßig über den Umfang der Sensoreinrichtung verteilt angeordnet. Dies erlaubt eine vollumfängliche Krafterfassung an dem Wälzlager sowie eine entsprechende vollumfängliche Überwachung auf Lagerschäden. Durch die gleichmäßige Verteilung der Kraftsensoren wird eine gleichmäßige Genauigkeit der erfassten Daten über den Umfang des Wälzlagers erzielt.

Das dünne, bandartige Trägermaterial kann z. B. eine Dicke von 0,1 bis 1 mm aufweisen. Dementsprechend ist ein Zwischenraum zwischen dem Wälzlager und dem Gegenlager vorzusehen, der zur Aufnahme der Sensoreinrichtung ausreicht. So kann z. B. ein Wälzlager mit einem geringfügig geringerem Außendurchmesser oder einer geringeren Dicke als sonst eingesetzt werden. Ebenso kann das Gegenlager etwas vergrößert werden. Auch eine Kombination hieraus ist vorteilhaft. Eine solche hülsenförmig ausgebildete Sensoreinrichtung kann kostengünstig wie folgt gefertigt werden. Als Trägermaterial wird ein dünnes Metallblech, z. B. mit einer Dicke im Bereich von 0,1 bis 0,5 mm, verwendet. Das Metallblech wird mit einer piezoresistiven Sensorschicht sowie mit Elektroden beschichtet. Hierbei tritt bereits der Effekt auf, dass sich das so beschichtete Trägermaterial in eine Hülsenform wölbt, so dass die endgütige Form der Sensoreinrichtung ohne besondere Zusatzschritte hergestellt werden kann.

Zur elektrischen Kontaktierung des Kraftsensors bzw. der Kraftsensoren und deren Verbindung mit einer elektronischen Auswerteeinrichtung gibt es verschiedene Möglichkeiten. Gemäß einer vorteilhaften Weiterbildung der Erfindung weist die Sensoreinrichtung einen zentralen elektrischen Anschlussabschnitt auf, mit dem mehrere oder alle Kraftsensoren elektrisch verbunden sind, wobei der zentrale elektrische Anschlussabschnitt bei zwischen einem Wälzlager und einem Gegenlager montiertem Zustand der Sensoreinrichtung daraus herausragt. Dies hat den Vorteil, dass eine einfache und schnelle Kontaktierung mittels eines zentralen elektrischen Verbindungselements, z. B. eines Steckverbinders, über den zentralen elektrischen Anschlussabschnitt möglich ist. Dies vereinfacht die Führung von elektrischen Leitungen von der Sensoreinrichtung zu einer elektronischen Auswerteeinrichtung.

Gemäß einer vorteilhaften Weiterbildung der Erfindung weisen alle elektrischen Leitungen von dem Kraftsensor bzw. den Kraftsensoren zu dem zentralen elektrischen Anschlussabschnitt die gleiche Leitungslänge auf. Dies hat den Vorteil, dass parasitäre Verfälschungen der von den Kraftsensoren abgegebenen Signale ausgeglichen werden, so dass die von den Kraftsensoren gelieferten Daten miteinander vergleichbar sind. Parasitäre Verfälschungen können z. B. in Folge von Isolationsdefiziten zwischen den elektrischen Leitungen und dem Substrat auftreten, so dass die einzelnen Leitungen auch gegeneinander nicht ausreichend isoliert sind. Die gleiche Leitungslänge kann bei unterschiedlichen Abständen der Kraftsensoren zum zentralen elektrischen Anschlussabschnitt z. B. dadurch realisiert werden, dass elektrische Leitungen in der Sensoreinrichtung nicht direkt gradlinig, sondern über Umwege, z. B. mäanderförmig, geführt werden.

Gemäß einer vorteilhaften Weiterbildung der Erfindung weist die Sensoreinrichtung mehrere verteilt angeordnete elektrische Anschlussabschnitte auf, die jeweils einem Kraftsensor zugeordnet sind und in der Nähe eines Kraftsensors angeordnet sind, wobei die verteilt angeordneten elektrischen Anschlussabschnitte bei zwischen einem Wälzlager und einem Gegenlager montiertem Zustand der Sensoreinrichtung daraus herausragen. Dies erlaubt eine besonders kurze Leitungsführung innerhalb der Sensoreinrichtung. Eventuelle unterschiedliche Leitungslängen bis zu einer elektronischen Auswerteeinrichtung treten dann außerhalb der Sensoreinrichtung auf, so dass auf diese Weise ein unerwünschter Einfluss parasitärer Verfälschungen eliminiert wird.

Gemäß einer vorteilhaften Weiterbildung der Erfindung ist in der Nähe von einem, mehreren oder allen Kraftsensoren eine lokale Signalauswerteschaltung in oder an der Sensoreinrichtung vorgesehen, die zur Abgabe eines Kraftsignals in Form eines digitalen Signals eingerichtet ist. Eine solche lokale Signalauswertung und Digitalisierung der Signale des Kraftsensors hat den Vorteil, dass nachfolgende, über die Zuleitungen eingekoppelte Verfälschungen keinen schädlichen Einfluss mehr auf eine weitere Signalauswertung haben. Das digitale Signal kann insbesondere in codierter Form bereitgestellt werden, z. B. mit einem Fehler korrigierenden Code, so dass auch hierdurch die Sicherheit gegenüber Signalverfälschungen weiter reduziert werden kann.

Ein vorteilhafter Aufbau der Sensoreinrichtung mit den Kraftsensoren kann folgende Schichten umfassen:
a) eine Substratschicht, die z. B. aus dem Trägermaterial gebildet sein kann,
b) bei Bedarf eine auf die Substratschicht mittels eines Haftvermittlers aufgebrachte piezoresistive Beschichtung,
c) eine auf die piezoresistive Beschichtung aufgebrachte Elektrode, die mit einer elektrischen Leitung zur elektrischen Kontaktierung des Kraftsensors verbunden ist.

Ferner kann eine Isolations- und Verschleißschutzschicht vorgesehen sein, die die Elektrode, die elektrische Leitung und die piezoresistive Sensorschicht abdeckt. Auf der der piezoresistiven Sensorschicht abgewandten Seite des Substrats kann zusätzlich eine Isolationsschicht und/oder eine rutschhemmende Schicht vorgesehen sein. Eine rutschhemmende Schicht kann alternativ oder zusätzlich auch auf der Isolations- und Verschleißschutzschicht vorgesehen sein. Die rutschhemmende Schicht kann z.B. als Materialschicht mit größerer Oberflächenrauigkeit des Substrats oder als Beschichtung mit einem rutschhemmenden Material vorgesehen sein. Als Material für die piezoresistive Sensorschicht kann z. B. dotierter oder undotierter Kohlenwasserstoff oder reiner Kohlenstoff verwendet werden. Vorteilhaft ist auch die Verwendung von DLC (diamond like carbon). Als Material für die Verschleißschutzsicht kann ein dotierter Kohlenwasserstoff oder diamantartiger Kohlenwasserstoff sowie Zirkon, Aluminiumoxyd oder ein anderes hartes Material verwendet werden.

Gemäß einer vorteilhaften Weiterbildung der Erfindung weist einer, mehrere oder alle Kraftsensoren einen mehrschichtigen Aufbau mit folgenden Schichten auf:
a) eine piezoresistive Sensorschicht,
b) eine Isolationsschicht,
c) eine Elektroden- und Anschlussleitungsschicht.

Hierbei ist die piezoresistive Sensorschicht auf einem Substrat angeordnet, z. B. dem Trägermaterial. Die Isolationsschicht ist auf der piezoresistiven Sensorschicht angeordnet, weist aber Aussparungen an denjenigen Stellen auf, an denen die Elektroden angeordnet sind. Die durch die Elektroden- und Anschlussleitungsschicht gebildeten Elektroden sind dabei direkt auf der piezoresistiven Sensorschicht angeordnet, wobei die Anschlussleitungen auf der Isolationsschicht angeordnet sind, so dass die Anschlussleitungen gegeneinander und gegenüber der piezoresistiven Sensorschicht isoliert sind. Die Isolations-und Verschleißschutzschicht kann zusätzlich auf den zuvor erwähnten Schichten sozusagen zur Abdeckung der gesamten Anordnung angeordnet sein.

Die Sensoreinrichtung kann in Hülsenform und/oder Ringscheibenform ohne Unterbrechung, d. h. mit durchgehender Ringform, ausgebildet sein. Gemäß einer vorteilhaften Weiterbildung der Erfindung weist die Sensoreinrichtung eine Unterbrechungsstelle auf, wodurch die hierdurch gebildeten Endbereiche der Sensoreinrichtung in Richtung der Längsachse der Sensoreinrichtung betrachtet überlappend sind. Dies kann z. B. durch einen bei Betrachtung der Sensoreinrichtung in radialer Richtung auf die Unterbrechungsstelle schrägen Verlauf der Endbereiche realisiert sein. Vorteilhaft ist auch ein in den Endbereichen gezackter oder gezahnter Verlauf, der eckig oder wellenförmig sein kann. Auch ein unregelmäßiges Muster kann vorteilhaft vorgesehen sein, wobei es vorteilhaft ist, wenn die an den beiden Endbereichen gebildeten Muster einander derart zugeordnet sind, dass sie ineinander greifen. Dies hat den Vorteil, dass die Sensoreinrichtung flexibel auch bei gewissen Maßtoleranzen des Wälzlagers bzw. des Gegenlagers verwendet werden können, da in einem gewissen Bereich eine Aufweitung der Sensoreinrichtung möglich ist. Durch die überlappenden Endbereiche wird trotzdem über den gesamten Umfang des Wälzlagers eine Abstützung des Wälzlagers gegenüber dem Gegenlager realisiert, so dass keine mechanisch ggf. ungünstigen freitragenden Bereiche entstehen.

Gemäß einer vorteilhaften Weiterbildung der Erfindung weist die Sensoreinrichtung zur elektrischen Kontaktierung des Kraftsensors bzw. der Kraftsensoren äußere elektrische Anschlusskontakte auf, die zur Kontaktierung durch an Bauteilen des Gegenlagers angeordneten Federkontakten eingerichtet sind, wobei die elektrische Kontaktierung des Kraftsensors bzw. der Kraftsensoren nur in Folge der Federkraft der Federkontakte hergestellt ist. Dies hat den Vorteil, dass starre Kontaktierungen, z. B. durch Lötstellen, vermieden werden können. Die Kontaktierung der Sensoreinrichtung kann damit robuster gestaltet werden und eignet sich daher in vielen realen praktischen Betriebssituationen eines Wälzlagers, da keine z.B. in Folge von Vibrationen bruchgefährdeten Lötstellen vorhanden sind. Der Kontakt wird dabei allein durch die Federkraft der Federkontakte hergestellt. Die Federkontakte kompensieren geringfügige Bewegungen infolge von Vibrationen, so dass eine dauerhaft sichere Kontaktierung gewährleistet ist.

Gemäß einer vorteilhaften Weiterbildung der Erfindung ist ein Kontaktierungsring vorgesehen, der am Gegenlager fixiert wird und dabei mit den Federkontakten an die elektrischen Anschlusskontakte der Sensoreinrichtung gepresst wird. Der Kontaktierungsring kann zugleich ein Fixierungsmittel zur Fixierung des Wälzlagers und der Sensoreinrichtung gegenüber dem Gegenlager sein. In dem Kontaktierungsring kann z. B. ein Kabelkanal vorgesehen sein, in dem die von den Federkontakten ausgehenden elektrischen Leitungen geführt zu einer elektronischen Auswerteeinrichtung sind.

Gemäß einer vorteilhaften Weiterbildung der Erfindung weist die Sensoreinrichtung an ihrer zum Wälzlager gerichteten und/oder an ihrer zum Gegenlager gerichteten Oberfläche im zylindrischen oder konischen Abschnitt rutschhemmende Mittel auf. Dies hat den Vorteil, dass eine erforderliche Fixierung des Wälzlagers in dem Gegenlager durch die Sensoreinrichtung erfolgen kann und je nach Einsatzfall sogar auf weitere Fixierungsmittel verzichtet werden kann. Die rutschhemmenden Mittel können z. B. als rutschhemmende Beschichtung, z. B. aus Gummi oder Silikon, oder durch Vorsehen einer gewissen Oberflächenrauhigkeit des Trägermaterials der Sensoreinrichtung realisiert sein.

Die Erfindung wird nachfolgend anhand von Ausführungsbeispielen unter Verwendung von Zeichnungen näher erläutert.

Es zeigen
- Figur 1: eine erste Ausführungsform einer Sensoreinrichtung mit einem Wälzlager und
- Figur 2: eine zweite Ausführungsform einer Sensoreinrichtung mit einem Wälzlager und
- Figur 3: eine dritte Ausführungsform einer Sensoreinrichtung mit einem Wälzlager und
- Figur 4: eine erste Ausführungsform eines Schichtaufbaus der Sensoreinrichtung und
- Figur 5: eine weitere Ausführungsform einer Sensoreinrichtung und
- Figur 6: eine zweite Ausführungsform eines Schichtaufbaus einer Sensoreinrichtung und
- Figur 7: eine dritte Ausführungsform eines Schichtaufbaus einer Sensoreinrichtung und
- Figur 8: eine vierte Ausführungsform eines Schichtaufbaus einer Sensoreinrichtung und
- Figur 9: eine weitere Ausführungsform einer Sensoreinrichtung und
- Figur 10: die Sensoreinrichtung gemäß Figur 7 in einer weiteren Ansicht und
- Figur 11: Details einer elektrischen Kontaktierung einer Sensoreinrichtung und
- Figuren 12 bis 14: eine weitere Sensoreinrichtung in verschiedenen Darstellungen.

In den Figuren werden gleiche Bezugszeichen für einander entsprechende Elemente verwendet.

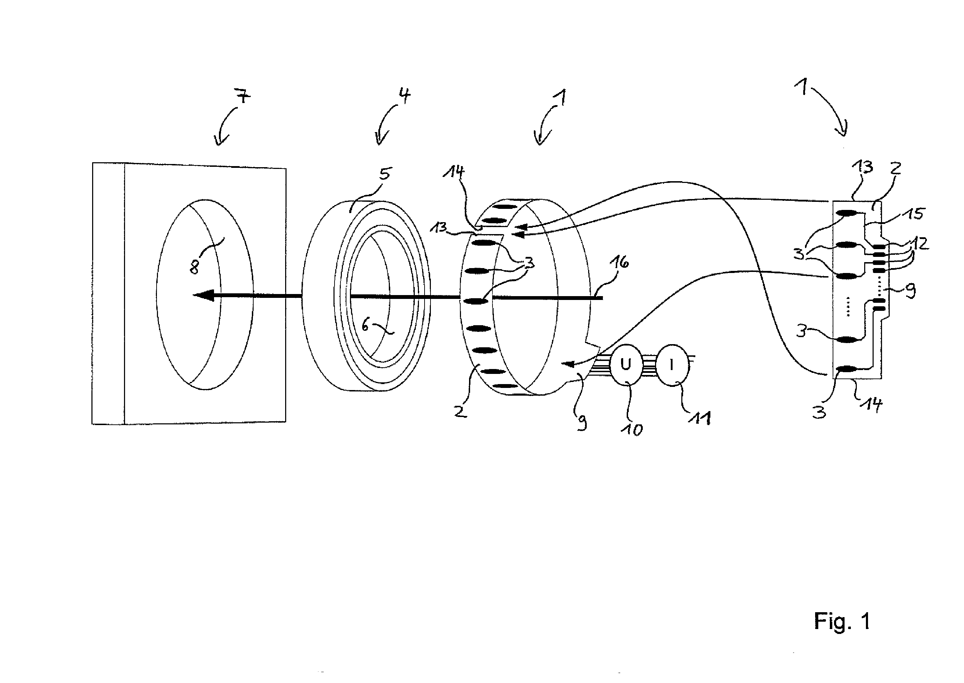

Die Figur 1 zeigt eine Sensoreinrichtung 1, die ein dünnes bandartiges Trägermaterial 2 und darauf aufgebrachte Kraftsensoren 3 aufweist. Im rechten Teil der Figur 1 ist die Sensoreinrichtung 1 eben dargestellt, sozusagen in die ebene Form "abgewickelt". Links daneben ist die Sensoreinrichtung 1 in ihrer für die Erfassung radialer Kräfte zwischen einem Wälzlager 4 und einem Gegenlager 7 vorgesehenen Ausbildung mit einem zylindrischen Abschnitt des Trägermaterials 2 dargestellt. Hierbei liegt dann der eine Endabschnitt 13 des Trägermaterials 2 nahe dem anderen Endabschnitt 14 des Trägermaterials 2 bzw. berührt diesen. Die Sensoreinrichtung 1 ist dazu eingerichtet, an einer äußeren Umfangsfläche 5 des Wälzlagers 4 angeordnet zu werden. Das Wälzlager 4 mit der daran angeordneten Sensoreinrichtung 1 wird dann in dem Gegenlager 7 montiert, wobei die Sensoreinrichtung 1 zumindest mit ihrem zylindrischen Abschnitt 2 zwischen der äußeren Umfangsfläche 5 des Wälzlagers 4 und einer Innenfläche 8 des Gegenlagers 7 angeordnet ist, wie durch den Pfeil (16) in Figur 1 symbolisiert. Der Pfeil 16 deutet auch zugleich die Längsachse der Sensoreinrichtung 1 an.

Bei entsprechender Ausführung des zylindrischen Abschnitts 2 mit geringerem Durchmesser kann die Sensoreinrichtung 1 auch an einer inneren Umfangsfläche 6 des Wälzlagers 4 angeordnet werden. In diesem Fall können radiale Kräfte zwischen der inneren Umfangsfläche 6 und einer durch das Wälzlager geführten (in der Figur 1 nicht dargestellten) Welle erfasst werden.

Die Sensoreinrichtung weist einen zentralen elektrischen Anschlussabschnitt 9 auf, der von dem zylindrischen Abschnitt 2 hervorsteht und bei Anbringung der Sensoreinrichtung 1 in der endgültigen Montageposition zwischen dem Wälzlager 4 und dem Gegenlager 7 herausragt. Auf den zentralen elektrischen Anschlussabschnitt 9 kann zum Beispiel ein elektrischer Steckverbinder aufgesteckt werden. Wie insbesondere im rechten Teil der Figur 1 erkennbar ist, sind die Kraftsensoren 3 jeweils über elektrische Leitungen 15 mit Anschlusskontakten 12 des zentralen elektrischen Anschlussabschnitts 9 verbunden. Durch Aufstecken eines Steckverbinders auf den zentralen elektrischen Anschlussabschnitt 9 können damit auf einfache Weise sämtliche Kraftsensoren 3 elektrisch kontaktiert werden.

Die Figur 1 zeigt noch stark schematisiert die Verbindung der Kraftsensoren 3 über den zentralen elektrischen Anschlussabschnitt 9 mit einer Auswerteeinrichtung, die zum Beispiel eine Spannungsquelle 10 und eine Strommesseinrichtung 11 aufweist. Mit der Spannungsquelle 10 und der Strommesseinrichtung 11 kann ein durch Ausübung einer Kraft auf einen Kraftsensor 3 veränderter elektrischer Widerstand des Kraftsensors ermittelt werden.

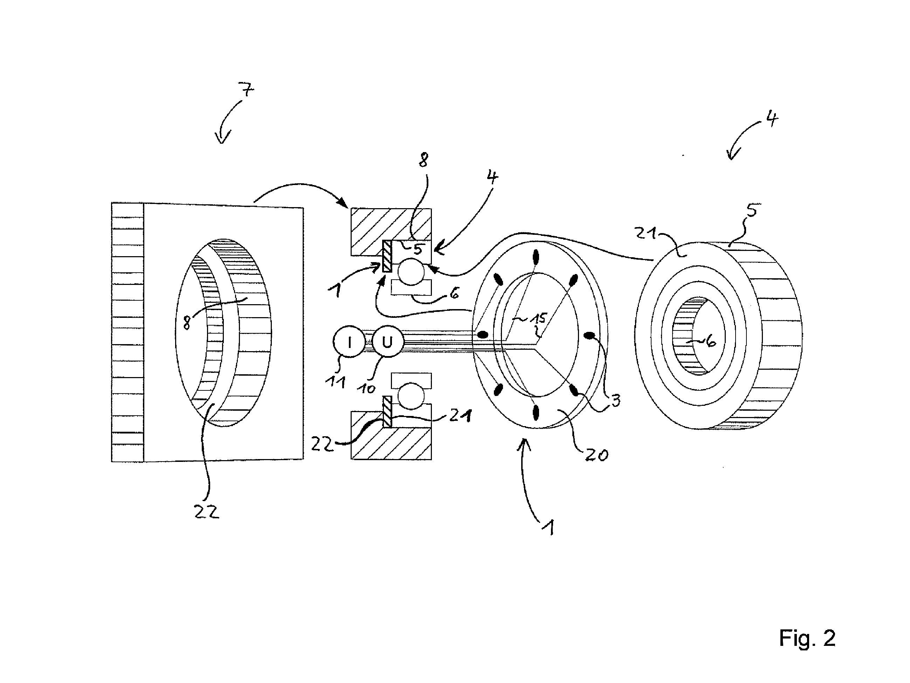

Die Figur 2 zeigt eine Ausführungsform einer Sensoreinrichtung 1, die sich zur Erfassung axialer Kräfte zwischen einem Wälzlager 4 und einem Gegenlager 7 oder einer mit einem Absatz versehenen drehbaren Welle eignet. Wie erkennbar ist, weist die Sensoreinrichtung 1 einen aus dünnem bandartigem Trägermaterial gebildeten ringscheibenförmigen Abschnitt 20 auf, auf dem mehrere Kraftsensoren 3 aufgebracht sind. Die Kraftsensoren 3 sind wiederum mit einer Auswerteeinrichtung 10, 11 verbunden, zum Beispiel in gleicher Weise wie anhand der Figur 1 erläutert. Wie erkennbar ist, wird der ringscheibenförmige Abschnitt 20 zwischen einer stirnseitigen Fläche 21 des Wälzlagers 4 und einer der stirnseitigen Fläche 21 zugeordneten Fläche des Gegenlagers 7 angeordnet.

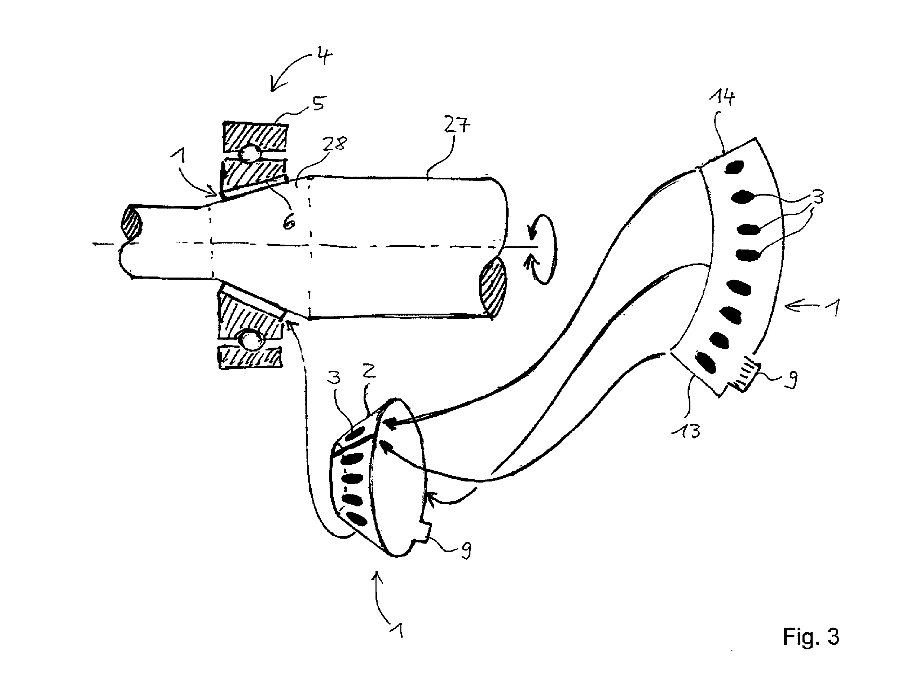

Die Figur 3 zeigt eine Ausgestaltung der Sensoreinrichtung 1, bei der das dünne bandartige Trägermaterial in Form eines konischen Abschnitts 2 vorgesehen ist. In der Figur 3 ist rechts die Sensoreinrichtung 1 in einem ebenen Zustand dargestellt. Die Sensoreinrichtung 1 wird dann, wie in der Figur 3 in der Mitte unten dargestellt, in eine Konusform gerollt. In dieser Form kann die Sensoreinrichtung 1 zum Beispiel zwischen einer Außenfläche 6 eines Wälzlagers 4 und einer Welle 27 mit einem konischen Abschnitt 28 angeordnet werden.

Die anhand der Figuren 1, 2 und 3 beschriebenen Sensoreinrichtungen 1 können auch kombiniert, das heißt gemeinsam an der äußeren Umfangsfläche 5 und an der stirnseitigen Fläche 21 des Wälzlagers 4, angeordnet werden. Es ist auch vorteilhaft, eine Sensoreinrichtung mit einem zylindrischen oder konischen Abschnitt und mit einem ringscheibenförmigen Abschnitt kombiniert einstückig auszubilden.

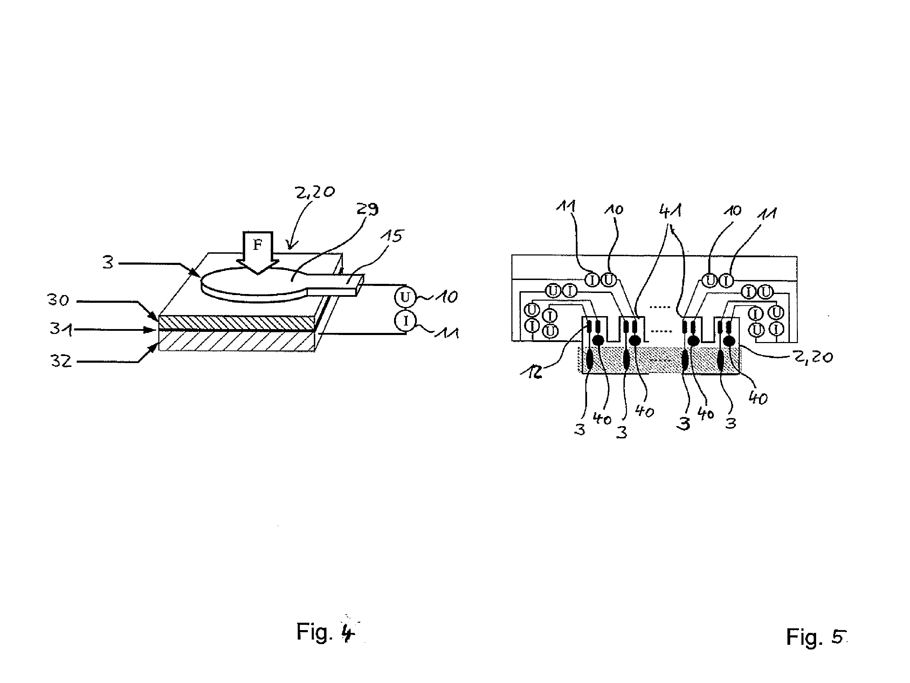

Die Figur 4 zeigt einen Schichtaufbau des bandartigen Trägermaterials 2, 20 mit Kraftsensoren 3. Dargestellt ist nur ein Ausschnitt des bandartigen Trägermaterials 2, 20 und ein einziger Kraftsensor 3. Vorgesehen ist eine Substratschicht 32, die zum Beispiel aus Metall oder Kunststoff hergestellt sein kann. Auf der Substratschicht 32 ist mittels einer Haftvermittler-Schicht 31, zum Beispiel Chrom oder einem Klebstoff, eine piezoresistive Sensorschicht 30 aufgebracht, zum Beispiel eine DLC-Schicht. Durch die Substratschicht 32 oder durch die Haftvermittler-Schicht 31 kann ein Strom fließen. Auf der piezoresistiven Sensorschicht 30 befinden sich strukturierte Elektroden 29, die zusammen mit dem darunterliegenden Teil der piezoresistiven Sensorschicht 30 Kraftsensoren 3 bilden. Die Kraftsensoren 3 sind kraftsensitive Widerstände, die ihren elektrischen Widerstand in Abhängigkeit der auf sie in Normalrichtung einwirkenden Kraft ändern. Beispielhaft sind in der Figur 4 noch die Spannungsquelle 10 und die Strommesseinrichtung 11 dargestellt. Über die Spannungsquelle 10 wird eine Spannung zwischen der Substratschicht 32 und der Elektrode 29 angelegt. Der zwischen der Elektrode 29 und der Substratschicht 32 fließende Strom wird über die Strommesseinrichtung 11 erfasst. Der Kraftsensor 3 weist einen von der in Normalrichtung auf ihn einwirkenden Kraft abhängigen elektrischen Widerstand, der durch diese Messung nach dem ohmschen Gesetz bestimmt werden kann. Hierdurch kann die auf den Kraftsensor 3 einwirkende Kraft bestimmt werden.

Die Figur 5 zeigt eine weitere Ausführungsform der Sensoreinrichtung 1, bei der an dem bandartigen Trägermaterial 2, 20 kein zentraler elektrischer Anschlussabschnitt 9 vorgesehen ist, sondern eine Vielzahl von einzelnen elektrischen Anschlussabschnitten 41, die jeweils einem Kraftsensor 3 sowie einem in der Nähe des Kraftsensors angeordneten Temperaturkompensationselement 40 zugeordnet sind. Die Kraftsensoren 3 sind, wie zuvor anhand der Figur 4 beschrieben, jeweils mit einer Spannungsquelle und einer Strommesseinrichtung verbunden. In gleicher Weise sind auch die Temperaturkompensationselemente 40 jeweils mit einer Spannungsquelle und einer Strommesseinrichtung verbunden. Durch die mittels der Temperaturkompensationselemente ermittelten Werte können Temperatureinflüsse, die zu einer Verfälschung der Messwerte der Kraftsensoren 3 führen, kompensiert werden. Die Temperaturkompensationselemente 40 können den gleichen Aufbau wie die Kraftsensoren 3 haben, z.B. wie anhand der Figur 4 beschrieben. Im Unterschied zu den Kraftsensoren 3 sind die Temperaturkompensationselemente 40 aber nicht im kraftbeaufschlagten Bereich angeordnet, der in der Figur 5 grau unterlegt gekennzeichnet ist.

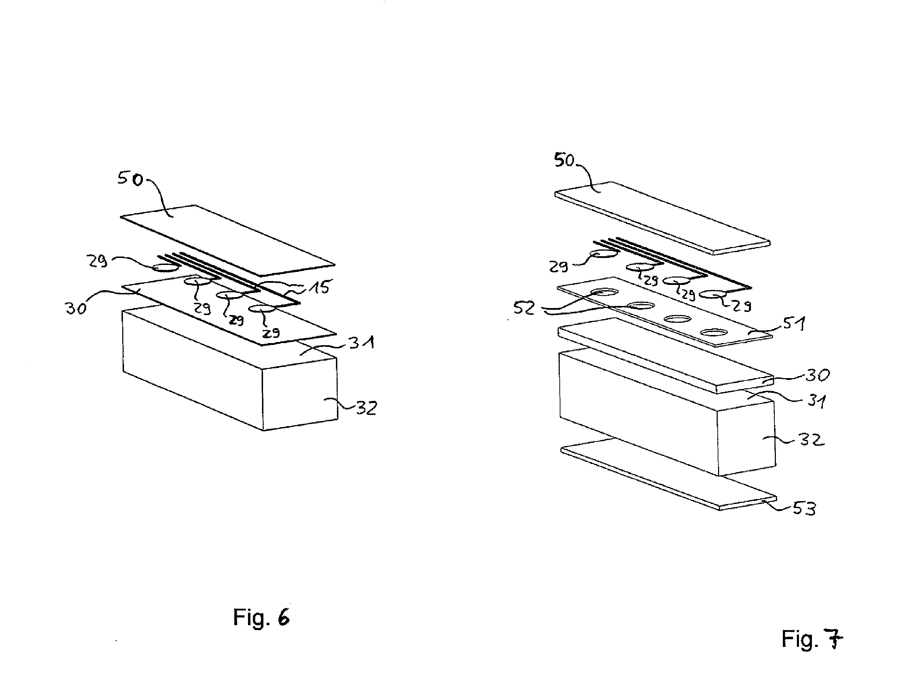

Die Figur 6 zeigt eine weitere Ausführungsform eines Schichtaufbaus einer Sensoreinrichtung, die wiederum ausschnittsweise dargestellt ist. Dargestellt sind beispielhaft vier Elektroden 29. Die Elektroden 29 sind auf einer piezoresistiven Schicht 30 angeordnet, die wiederum, über eine Haftvermittler-Schicht 31, auf einer Substratschicht 32 angeordnet ist. Dies entspricht soweit dem Aufbau gemäß Figur 4. Zusätzlich ist noch eine Isolationsschicht 50 vorgesehen, die auf den Elektroden 29 sowie auf den von den Elektroden 29 und den elektrischen Leitungen nicht bedeckten Bereichen der piezoresistiven Sensorschicht 30 angeordnet ist. Durch die Isolationsschicht 50 wird eine Isolation der Kraftsensoren gegen Umgebungseinflüsse erzielt. Zudem bewirkt die Isolationsschicht 50 auch einen Schutz der darunter liegenden Schichten vor Verschleiß, zum Beispiel in Folge von Reibung. Auch auf der Unterseite der Sensoreinrichtung kann eine Schutzschicht aufgebracht werden.

Die Figur 7 zeigt eine weitere Ausführungsform eines Schichtaufbaus einer Sensoreinrichtung 1. Vorgesehen sind wiederum Elektroden 29 und die piezoresistive Sensorschicht 30, die über eine Haftvermittlungs-Schicht 31 auf einer Substratschicht 32 angeordnet ist. Zudem ist die Isolationsschicht 50 vorgesehen. Zusätzlich ist auf der piezoresistiven Sensorschicht 30 eine weitere Isolationsschicht 51 vorgesehen. Diese Isolationsschicht 51 weist Aussparungen 52 an denjenigen Stellen auf, an denen die Elektroden 29 platziert werden. Hierdurch kommen die Elektroden 29 in direkten elektrischen Kontakt mit der piezoresistiven Sensorschicht 30. Die von den Elektroden 29 abgehenden elektrischen Leitungen 15 sind dabei durch die weitere Isolationsschicht 51 gegenüber der piezoresistiven Sensorschicht 30 und gegeneinander isoliert.

Zusätzlich ist unterhalb der Substratschicht 32 eine zusätzliche Isolationsschicht 53 vorgesehen, durch die in der Regel elektrisch leitfähige Substratschicht 32 gegenüber der Umgebung elektrisch isoliert ist.

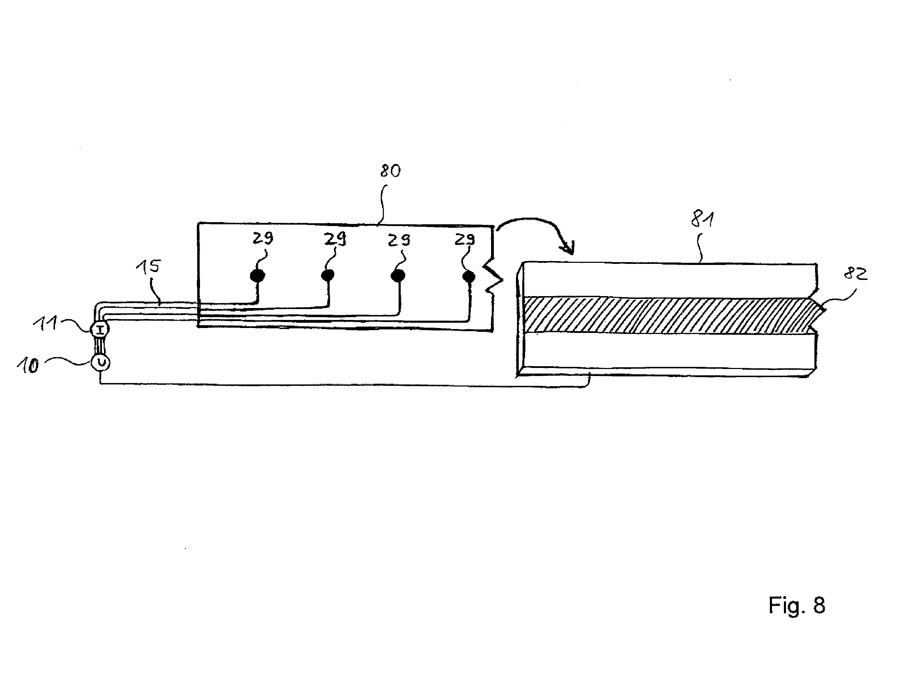

Die Figur 8 zeigt eine Ausführungsform für den Aufbau der Sensoreinrichtung 1, bei der ein Substrat 81 mit der piezoresistiven Beschichtung 82 versehen ist. Die piezoresistive Beschichtung 82 kann entweder das gesamte Substrat 81 oder, wie in der Figur 8 dargestellt, nur Bereiche des Substrats bedecken, zum Beispiel einen Streifen. Es kann auch vorgesehen sein, das Substrat 81 vollständig mit der piezoresistiven Beschichtung zu versehen und zum Beispiel an den Rändern des Substrats 81 eine Isolierungsschicht auf die piezoresistive Sensorschicht 82 aufzubringen, zum Beispiel durch Lackieren oder Aufbringen einer Folie.

Die Elektroden 29 werden bei der Ausführungsform gemäß Figur 8 auf einer Folie 80 vorgesehen. Die Folie 80 kann zum Beispiel als metallbeschichtete Folie ausgebildet sein. Auf dieser Folie werden dann zum Beispiel mit einem Laser die entsprechenden Strukturen erzeugt, die die Elektroden 29 sowie die Leiterbahnen 15 bilden. Die auf diese Weise vorbereitete Folie kann dann auf das Substrat 81 aufgebracht werden, derart, dass die Elektroden 29 auf der piezoresistiven Sensorschicht 82 angeordnet sind. Die Folie 80 kann zum Beispiel selbsthaftend sein. Vorteilhaft können die elektrischen Zuleitungen 15 dabei außerhalb des Bereichs der piezoresistiven Sensorschicht 82 auf dem Substrat angeordnet sein. Dies hat den Vorteil, dass bei entsprechender Isolierung des Substrats 81 kein parasitärer Widerstand zum Substrat auftritt.

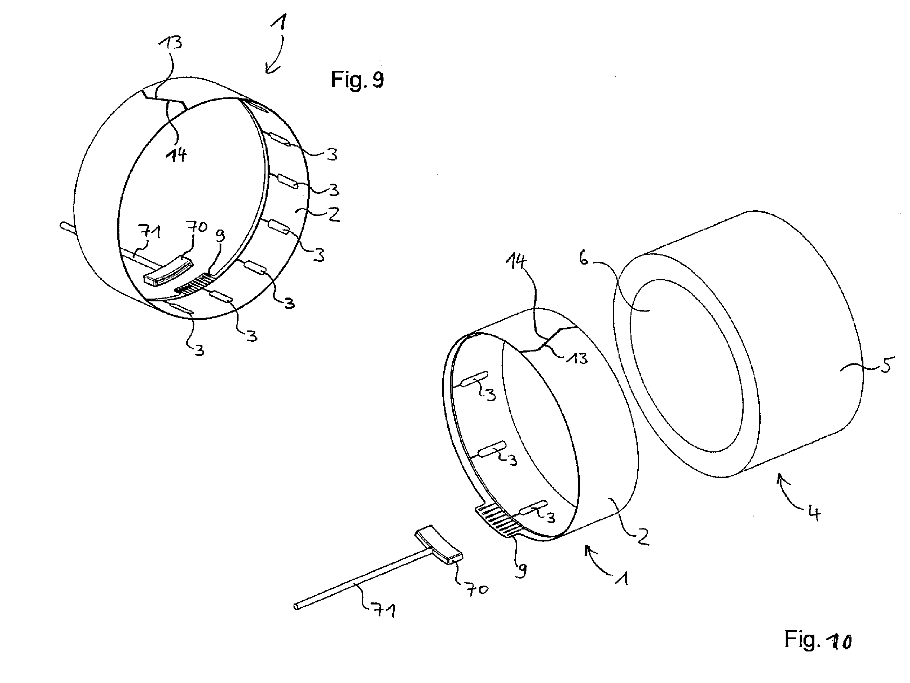

Die Figuren 9 und 10 zeigen eine weitere Ausführungsform der Sensoreinrichtung 1, bei der die Endbereiche 13, 14 nicht, wie in der Figur 1 dargestellt, einen geraden Verlauf haben, sondern zick-zack-förmig verlaufen. Hierdurch wird eine Überlappung der Endbereiche 13, 14 in Richtung der Längsachse der Sensoreinrichtung betrachtet hergestellt. Statt des zick-zack-Verlaufs kann auch ein wellenförmiger Verlauf oder ein beliebiges unregelmäßiges Muster vorgesehen sein.

Die Figuren 9 und 10 zeigen zudem die elektrische Kontaktierung des zentralen elektrischen Anschlussabschnitts 9 mittels eines elektrischen Steckverbinders 70, an dem ein Anschlusskabel 71 angeordnet ist.

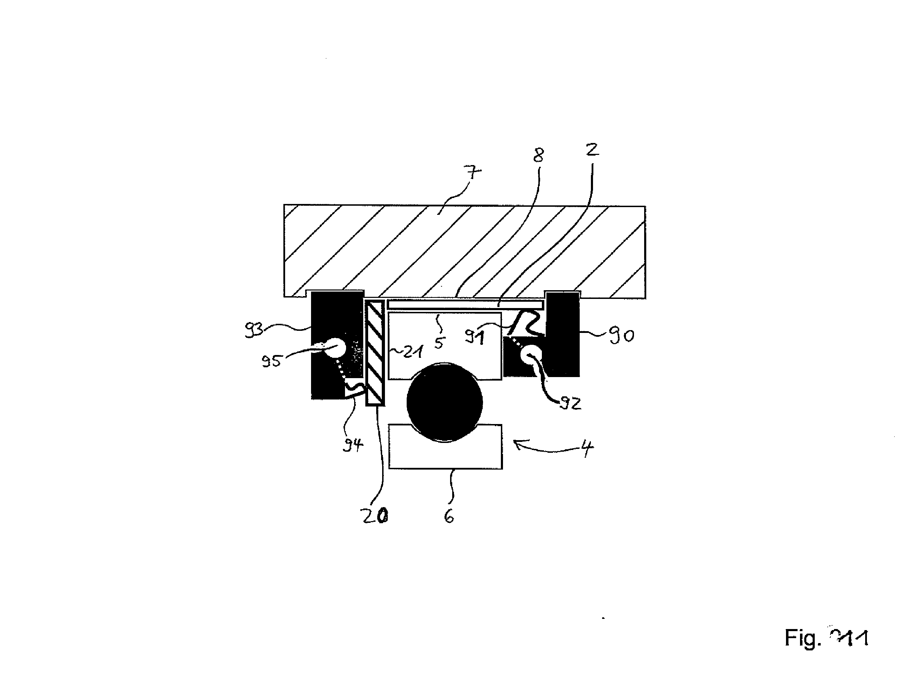

Die Figur 11 zeigt eine alternative Möglichkeit zur elektrischen Kontaktierung der Kraftsensoren 3. Es sei davon ausgegangen, dass die Sensoreinrichtung 1, wie zum Beispiel in Figur 1 oder Figur 5 dargestellt, in einem oder mehreren elektrischen Anschlussabschnitten 9, 41 Kontaktflächen aufweist, die über Leitungen 15 mit den Kraftsensoren 3 beziehungsweise den Temperaturkompensationselementen 40 verbunden sind. Gemäß Figur 11 sind zur elektrischen Kontaktierung des zylindrischen Abschnitts 2 Federkontakte 91 vorgesehen, die mechanisch in einem Haltering 90 gehalten sind. Die Federkontakte 91 stellen die elektrische Verbindung sicher und können zugleich eine mechanische Arretierung des zylindrischen Abschnitts 2 bewirken. Eine mechanische Arretierung kann auch durch den Haltering 90 erfolgen. Die Federkontakte 91 sind über elektrische Leitungen, die durch einen umlaufenden Kabelkanal 92 geführt sind, elektrisch mit der Auswerteeinrichtung verbunden.

Analog dazu sind die Kontaktflächen des ringscheibenförmigen Abschnitts 20 über Federkontakte 94 elektrisch kontaktiert. Die Federkontakte 94 werden durch einen weiteren Haltering 93 gehalten. Die Federkontakte 94 stellen über elektrische Kabel, die in einem umlaufenden Kabelkanal 95 geführt sind, eine elektrische Verbindung zu einer Auswerteeinrichtung her.

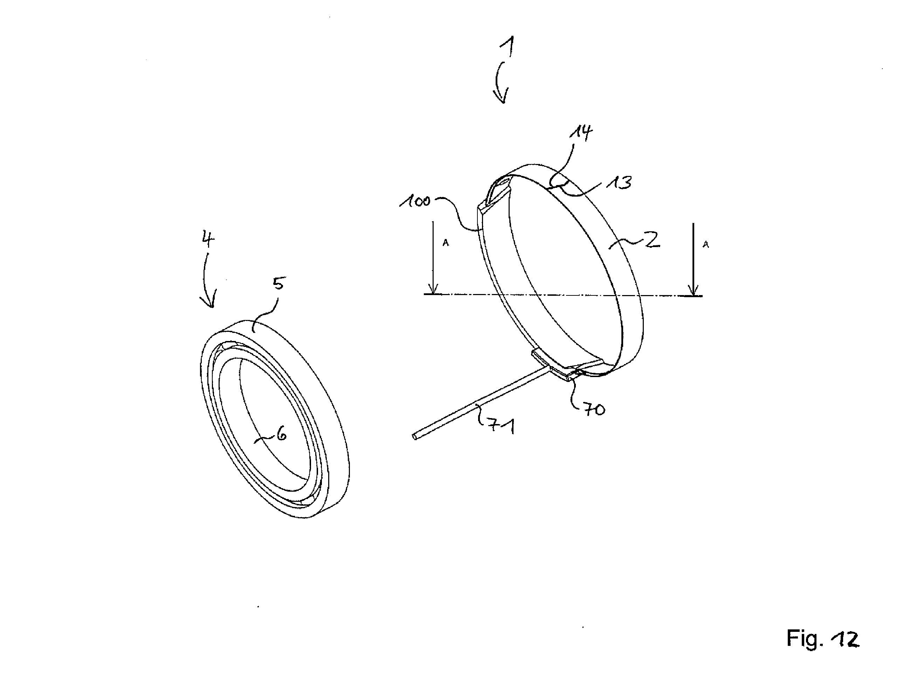

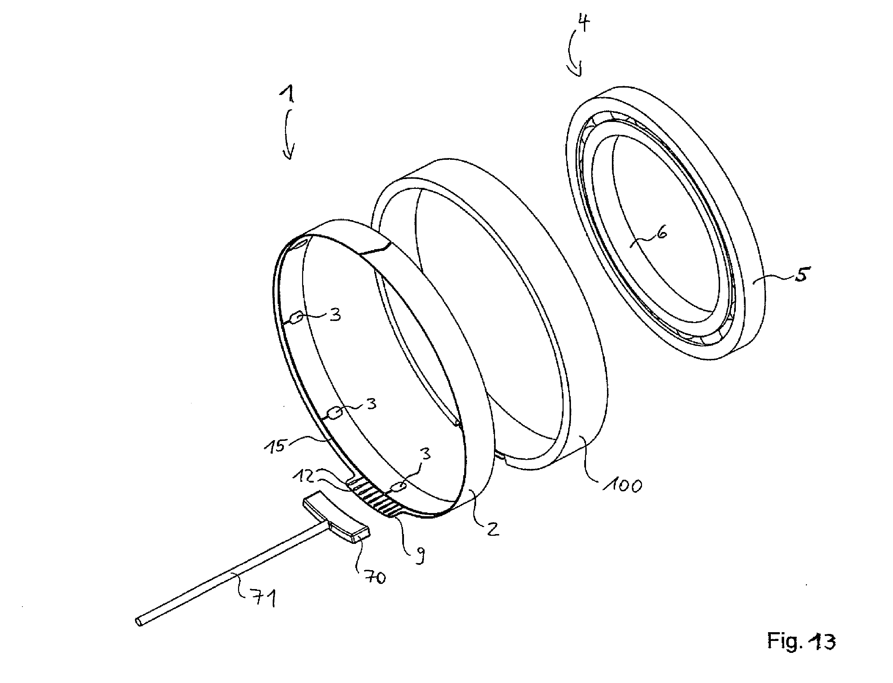

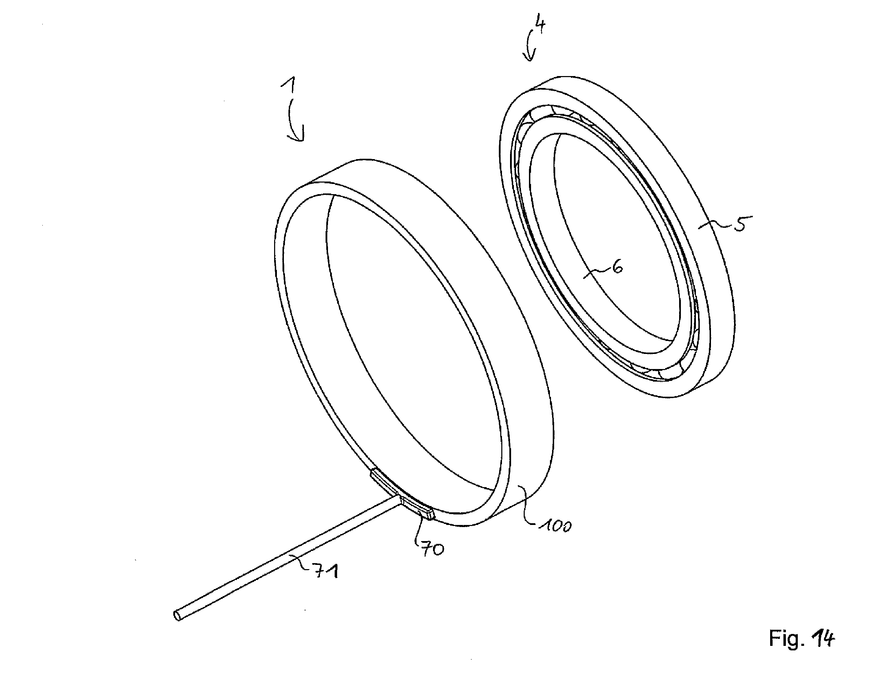

Die Figur 12 zeigt eine weitere Ausführungsform der Sensoreinrichtung 1, bei der das bandartige Trägermaterial 2 in ein Hüllmaterial 100, zum Beispiel einen Kunststoff, eingebettet ist. Das bandartige Trägermaterial 2 kann zum Beispiel durch Kunststoff vergossen sein. Das Hüllmaterial 100 ist in der Figur 12 nur teilweise dargestellt, um die Einbettung des bandartigen Trägermaterials 2 zu zeigen. Das Hüllmaterial 100 kann ein rutschhemmendes Material sein. Die Rutschhemmung kann z. B. durch eine Oberflächenbehandlung des Materials realisiert sein. Die Figur 13 zeigt die Sensoreinrichtung gemäß Figur 12 in einem Zustand, in dem das Hüllmaterial 100 separat von dem bandartigen Trägermaterial 2 dargestellt ist. Die Figur 14 zeigt die Anordnung gemäß Figur 13, bei der das bandartige Trägermaterial 2 vollständig von dem Hüllmaterial 100 umhüllt ist und zugleich der elektrische Steckverbinder 70 mit dem zentralen elektrischen Anschlusselement 9 verbunden ist.

## Patentansprüche

1. Sensoreinrichtung (1) mit einem dünnen, bandartigen Trägermaterial (2, 20) und mit einem oder mehreren Kraftsensoren (3), die auf das Trägermaterial (2, 20) aufgebracht und/oder in das Trägermaterial (2, 20) integriert sind, wobei das Trägermaterial (2, 20) dazu eingerichtet ist,
a) zwischen einer Außenfläche (5, 6, 21) eines Wälzlagers (4) und einer als Gegenlager wirkenden Aufnahmeeinrichtung (7) für das Wälzlager (4) angeordnet zu werden und mittels der Kraftsensoren (3) eine oder mehrere der zwischen dem Wälzlager (4) und dem Gegenlager (7) wirkenden Kräfte zu erfassen und als elektrische Signale (S1 bis S12) abzugeben, oder
b) zwischen einer Außenfläche (5, 6, 21) eines Wälzlagers (4) und einer mittels des Wälzlagers (4) gelagerten drehbaren Welle angeordnet zu werden und mittels der Kraftsensoren (3) eine oder mehrere der zwischen dem Wälzlager (3) und der drehbaren Welle wirkenden Kräfte zu erfassen und als elektrische Signale (S1 bis S12) abzugeben.

2. Hülsenförmig ausgebildete Sensoreinrichtung nach Anspruch 1, **dadurch gekennzeichnet, dass** das dünne, bandartige Trägermaterial (2, 20) wenigstens einen zylindrischen oder konischen Abschnitt (2) der Sensoreinrichtung (1) bildet, wobei der oder die Kraftsensoren (3) in dem zylindrischen oder konischen Abschnitt (2) auf das Trägermaterial aufgebracht und/oder in das Trägermaterial integriert sind, wobei der zylindrische oder konische Abschnitt (2) dazu eingerichtet ist,
a) zwischen einer Außenfläche (5, 6, 21) eines Wälzlagers (4) und einer als Gegenlager wirkenden Aufnahmeeinrichtung (7) für das Wälzlager (4) angeordnet zu werden und mittels der Kraftsensoren (3) eine oder mehrere der zwischen dem Wälzlager (4) und dem Gegenlager (7) wirkenden Kräfte zu erfassen und als elektrische Signale (S1 bis S12) abzugeben, oder
b) zwischen einer Außenfläche (5, 6, 21) eines Wälzlagers (4) und einer mittels des Wälzlagers (4) gelagerten drehbaren Welle angeordnet zu werden und mittels der Kraftsensoren (3) eine oder mehrere der zwischen dem Wälzlager (4) und der drehbaren Welle wirkenden Kräfte zu erfassen und als elektrische Signale (S1 bis S12) abzugeben.

3. Ringscheibenförmig ausgebildete Sensoreinrichtung nach Anspruch 1, **dadurch gekennzeichnet, dass** das dünne, bandartige Trägermaterial (2, 20) wenigstens einen ringscheibenförmigen Abschnitt (20) der Sensoreinrichtung (1) bildet, wobei der oder die Kraftsensoren (3) in dem ringscheibenförmigen Abschnitt (20) auf das Trägermaterial aufgebracht und/oder in das Trägermaterial integriert sind, wobei der ringscheibenförmige Abschnitt (20) dazu eingerichtet ist, zwischen einer stirnseitigen Fläche (21) des Wälzlagers (4) und einer der stirnseitigen Fläche (21) zugeordneten Fläche (22) des Gegenlagers (7) oder der drehbaren Welle angeordnet zu werden und eine oder mehrere der zwischen dem Wälzlager (4) und dem Gegenlager (7) oder der drehbaren Welle wirkenden Kräfte zu erfassen und als elektrische Signale (S1 bis S12) abzugeben.

4. Sensoreinrichtung, **gekennzeichnet durch** eine Kombination wenigstens einer Sensoreinrichtung nach Anspruch 2 mit wenigstens einer Sensoreinrichtung (2, 20) nach Anspruch 3, wobei das dünne, bandartige Trägermaterial wenigstens einen zylindrischen oder konischen Abschnitt (2) und an den zylindrischen oder konischen Abschnitt (2) angrenzend einen dazu abgewinkelten ringscheibenförmigen Abschnitt (20) der Sensoreinrichtung (1) bildet, wobei der oder die Kraftsensoren (3) in dem zylindrischen oder konischen Abschnitt (2) und in dem ringscheibenförmigen Abschnitt (20) auf das Trägermaterial aufgebracht und/oder in das Trägermaterial integriert sind.

5. Sensoreinrichtung nach einem der vorhergehenden Ansprüche, **dadurch gekennzeichnet, dass** mehrere Kraftsensoren (3) gleichmäßig über den Umfang der Sensoreinrichtung (1) verteilt angeordnet sind.

6. Sensoreinrichtung nach einem der vorhergehenden Ansprüche, **dadurch gekennzeichnet, dass** die Sensoreinrichtung (1) einen zentralen elektrischen Anschlussabschnitt (9) aufweist, mit dem mehrere oder alle Kraftsensoren (3) elektrisch verbunden sind, wobei der zentrale elektrische Anschlussabschnitt (9) bei zwischen einem Wälzlager (4) und einem Gegenlager (7) montiertem Zustand der Sensoreinrichtung (1) herausragt.

7. Sensoreinrichtung nach Anspruch 6, **dadurch gekennzeichnet, dass** alle elektrischen Leitungen (15) von den Kraftsensoren (3) zu dem zentralen elektrischen Anschlussabschnitt (9) die gleiche Leitungslänge aufweisen.

8. Sensoreinrichtung nach einem der vorhergehenden Ansprüche, **dadurch gekennzeichnet, dass** die Sensoreinrichtung (1) mehrere verteilt angeordnete elektrische Anschlussabschnitte (41) aufweist, die jeweils einem Kraftsensor (3) zugeordnet sind und in der Nähe eines Kraftsensors (3) angeordnet sind, wobei die verteilt angeordneten elektrischen Anschlussabschnitte (41) bei zwischen einem Wälzlager (4) und einem Gegenlager (7) montiertem Zustand der Sensoreinrichtung (1) herausragen.

9. Sensoreinrichtung nach einem der vorhergehenden Ansprüche, **dadurch gekennzeichnet, dass** in der Nähe von einem, mehreren oder allen Kraftsensoren (3) eine lokale Signalauswerte- und/oder Verstärkerschaltung in oder an der Sensoreinrichtung (1) vorgesehen ist, die zur Abgabe eines Kraftsignals in verstärkter und/oder digitaler Form eingerichtet ist.

10. Sensoreinrichtung nach einem der vorhergehenden Ansprüche, **dadurch gekennzeichnet, dass** einer, mehrere oder alle Kraftsensoren (3) einen mehrschichtigen Aufbau mit folgenden Schichten aufweisen:
a) eine piezoresistive Sensorschicht (30),
b) eine oder mehrere Isolationsschichten (51),
c) eine Elektroden- und Anschlussleitungsschicht (29, 15),
wobei die piezoresistive Sensorschicht auf einem Substrat (32) angeordnet ist, die Isolationsschicht (51) auf der piezoresistiven Sensorschicht (30) angeordnet ist, die Isolationsschicht (51) Aussparungen (52) an denjenigen Stellen aufweist, an denen die Elektroden (29) angeordnet sind, so dass die Elektroden (29) direkt auf der piezoresistiven Sensorschicht (30) angeordnet sind und die Anschlussleitungen (15) der Elektroden- und Anschlussleitungsschicht auf der Isolationsschicht (51) angeordnet sind.

11. Sensoreinrichtung nach Anspruch 10, **dadurch gekennzeichnet, dass** an die der piezoresistiven Sensorschicht abgewandte Seite des Substrats (32) isolierende und/oder rutschhemmende Schicht aufweist.

12. Sensoreinrichtung nach einem der vorhergehenden Ansprüche, **dadurch gekennzeichnet, dass** die Sensoreinrichtung (1) eine Unterbrechungsstelle aufweist, wobei die hierdurch gebildeten Endbereiche (13, 14) der Sensoreinrichtung (1) in Richtung der Längsachse (16) der Sensoreinrichtung (1) betrachtet überlappend sind.

13. Sensoreinrichtung nach einem der vorhergehenden Ansprüche, **dadurch gekennzeichnet, dass** die Sensoreinrichtung (1) zur elektrischen Kontaktierung des Kraftsensors (3) bzw. der Kraftsensoren (3) äußere elektrische Anschlusskontakte (12) aufweist, die zur Kontaktierung durch an Bauteilen des Gegenlagers (7) angeordneten Federkontakten (91, 94) eingerichtet sind, wobei die elektrische Kontaktierung des Kraftsensors (3) bzw. der Kraftsensoren (3) nur in Folge der Federkraft der Federkontakte (91, 94) hergestellt ist.

14. Sensoreinrichtung nach einem der vorhergehenden Ansprüche, **dadurch gekennzeichnet, dass** die Sensoreinrichtung (1) an Ihrer zum Wälzlager (4) gerichteten und/oder an ihrer zum Gegenlager (7) gerichteten Oberfläche im zylindrischen oder konischen Abschnitt rutschhemmende Mittel (100) aufweist.
